# EUROPÄISCHE PATENTANMELDUNG

(11) **EP 4 686 920 A1**
(43) Veröffentlichungstag der Anmeldung: **04.02.2026**
(21) Anmeldenummer: 25193263.8
(22) Anmeldetag: 31.07.2025
(51) Int. Cl.: G01G 21/30

(54) **AUFBLASBARE DICHTUNG**

(30) Priorität: 02.08.2024 DE 102024122204
(71) Anmelder: WIPOTEC GmbH, 67657 Kaiserslautern (DE)
(72) Erfinder: Fleige, Christian, 67661 Kaiserslautern (DE); Schulzki, Alexander, 67705 Stelzenberg (DE)
(74) Vertreter: Eder Schieschke & Partner mbB

(57) **Zusammenfassung**

Die Erfindung betrifft eine modulare Dichtung für eine Waage, deren Lasteinleitungselement in einer Höhenrichtung Z eine Gewichtskraft überträgt, die Dichtung umfassend ein Verschlussmodul mit einem eine druckbeaufschlagbare Kammer bildenden Dichtelement und einem eine Dichtfläche aufweisenden Gegenlager, wobei die Kammer mit einem Medium so beaufschlagbar ist, dass sich ein Dichtabschnitt in Höhenrichtung Z an die Dichtfläche anlegt.

## Beschreibung

Die vorliegende Erfindung betrifft eine Dichtung für Waagen, Wägezellen oder Kraftsensoren, die im Weiteren vereinfachend als "Waage" bezeichnet werden. Solche Waagen umfassen in der Regel ein schützendes Gehäuse, wobei ein die zu wiegende Last in das Gehäuse übertragendes Lasteinleitungselement (auch Lasteinleitungsbolzen genannt) durch eine Gehäuseöffnung berührungslos hindurchragt. Bei Waagen mit Unterflurlastabgang wird das Lasteinleitungselement mit der zu messenden Kraft auf Zug belastet und ragt durch die Unterseite des Gehäuses heraus.

Um Falschwägungen zu vermeiden, muss im Betrieb der Kontakt zwischen Lasteinleitungselement und Gehäuse (Kraftnebenschluss) vermieden werden. Zugleich besteht insbesondere in der Produktion von Lebensmitteln oder pharmazeutischen Produkten häufig das Erfordernis, die Waage in Betriebspausen zu reinigen, was auch mit heißen oder aggressiven Flüssigkeiten oder unter Verwendung von Dampfstrahlern erfolgen kann. Für diesen Fall ist es wichtig, den zwischen Lasteinleitungselement und Gehäuse bestehenden Spalt mit einer Dichtung sicher zu verschließen, um das Gehäuseinnere gegen den Eintritt von Reinigungsmittel zu schützen.

Außerdem ist es wünschenswert, das Lasteinleitungselement in Betriebspausen zu arretieren, um eine ungewollte oder zu hohe Lasteinwirkung auf die sensible Wägezelle im Gehäuseinneren zu vermeiden. Der Aus- und Einbau der Dichtung für Wartungs- oder Reparaturzwecke und auch während der Fertigung soll im Bedarfsfall außerdem (auch für den Betreiber selber) schnell, einfach und positionsgenau relativ zum Lasteinleitungselement möglich sein.

Auch im regulären Betrieb besteht darüber hinaus der Wunsch, den Eintritt von Verschmutzungen durch den Spalt oder das Ansammeln von Schmutz im Bereich der Gehäuseöffnung zu vermeiden.

Aus der EP 1 146 322 B1 ist eine Waage mit einer aufblasbaren Dichtung bekannt, bei der sich ein am Gehäuse befestigter, aufblasbarer Balg in radialer Richtung, und damit quer zur Lasteinleitungsrichtung, zu einem mit dem Lasteinleitungselement verbundenen beweglichen Teil hin erstreckt und dabei den dazwischenliegenden Spalt verschließt. Die Arretierung des Lasteinleitungselements ist dabei jedoch nicht befriedigend stabil und die Wartung ist umständlich. Außerdem ist diese Art der Dichtung für Waagen mit Unterflurlastabgang nicht geeignet, da sich Schmutz in der nach oben offenen Labyrinth-Dichtung ansammelt und nur aufwendig entfernt werden kann.

Aufgabe der Erfindung war es daher, die vorgenannten Nachteile für eine Waage mit Unterflurlastabgang zu beseitigen. Die Aufgabe wird gelöst durch eine modulare Dichtung nach Anspruch 1, eine Waage nach Anspruch 11, ein Verfahren nach Anspruch 13 und ein Dichtelement nach Anspruch 15.

Die Erfindung beruht auf der Erkenntnis, durch Ausdehnung eines Dichtelements parallel zur Längserstreckung des Lasteinleitungselements und in Richtung der Lasteinleitung eine besonders wirksame Abdichtung mit gleichzeitiger Arretierung des Lasteinleitungselements erreichen zu können. Dabei leitet die Dichtung in zwei zueinander orthogonalen Richtungen Kräfte in ein mit dem Lasteinleitungselement gekoppeltes Gegenlager ein, welches dadurch eine besonders sichere Abdichtung und stabile Arretierung gewährleistet.

Die erfindungsgemäße modulare Dichtung ist geschaffen für eine Waage, deren Lasteinleitungselement entlang einer vertikalen Höhenrichtung Z nach unten aus einem Gehäuse der Waage herausragt. Dabei umfasst die Dichtung ein vorzugsweise rotationssymmetrisches Verschlussmodul, welches sich um eine in Höhenrichtung Z verlaufende Längsachse Z_{A} erstreckt. Das Verschlussmodul ist als eine erste wesentliche Komponente der Dichtung dazu vorgesehen, im Bereich der Durchführung des Lasteinleitungselement aus dem Waagengehäuse an diesem Gehäuse fixiert zu werden. Es weist eine zentrische Halterungsöffnung auf, durch welche das Lasteinleitungselement der Waage hindurchragen kann bzw. im mit einer Waage verbauten Zustand hindurchragt.

Teil des Verschlussmoduls ist eine Halterung und ein von der Halterung aufgenommenes, mit Fluid aufblasbares, dehnbares Dichtelement. Vorzugsweise ist das Dichtelement als ein die Längsachse Z_{A} umlaufender, aufblasbarer Wulst oder Schlauch ausgebildet. Durch Änderung seines Innendrucks kann das Dichtelement wahlweise aus einem Ruhezustand in einen Abdichtzustand oder zurück überführt werden, indem es sich aufbläht (Abdichtzustand) oder zusammenzieht (Ruhezustand). Vorzugsweise wird das Dichtelement mit Druckluft beaufschlagt, denkbar ist jedoch auch jedes andere Fluid, welches vorzugsweise kompressibel sein sollte.

Als zweite wesentliche Komponente der Dichtung umfasst diese ferner ein mit dem Dichtelement zusammenwirkendes Gegenlager, welches zur Befestigung am Lasteinleitungselement vorgesehen ist. Erfindungsgemäß ist ein Dichtabschnitt des Dichtelements dazu ausgebildet, im Abdichtzustand an einer Dichtfläche des Gegenlagers anzuliegen und dadurch einen im Ruhezustand zwischen Dichtfläche und Dichtelement bestehenden Spalt abzudichten. Das Gegenlager und mit ihm das Lasteinleitungselement wird dazu im Abdichtzustand vom Dichtelement - vorzugsweise allseitig umlaufend - beaufschlagt. Diese Beaufschlagung dient einerseits dazu, den im Ruhezustand bestehenden Spalt sicher abzudichten und das Waagengehäuse vor dem Eindringen von Schmutz, Staub, Feuchtigkeit, Flüssigkeit oder sonstigen unerwünschten Stoffen zu schützen. Andererseits erfährt das Lasteinleitungselement durch das Dichtelement eine stabilisierende Kraft, die es vor ungewollten und schlagartigen Kräften schützen soll.

Nach einer vorteilhaften Ausführungsform der Erfindung ist die Dichtung dazu ausgelegt, den Spalt zwischen Dichtelement und Gegenlager gasdicht abzudichten. Dann kann das Eindringen von zündfähigen Gasen in das Waagengehäuse bei Bedarf durch Betätigung der Dichtung vermieden werden, etwa wenn in einer Werkhalle ein explosionsfähiges Gas festgestellt wird. Umgekehrt kann natürlich auch die Umgebung des Waagengehäuses gegen den unerwünschten Austritt von Gasen aus dem Waagengehäuse geschützt werden.

Zur besonders wirksamen Krafteinleitung in das Gegenlager ist die Dichtfläche in Höhenrichtung Z erfindungsgemäß so unterhalb des Dichtelements angeordnet, dass sich das Dichtelement beim Übergang vom Ruhezustand in den Abdichtzustand durch seine in Höhenrichtung Z erfolgende Ausdehnung mit seinem Abschnitt an die darunter liegende Dichtfläche anlegt und eine die Abdichtung unterstützende Kraft auf das Gegenlager ausübt. Anders als im Stand der Technik wird das Lasteinleitungselement dabei erfindungsgemäß bewusst in Richtung der Lasteinleitung beaufschlagt, also in der Richtung, in welcher die zu messende Last entlang des Lasteinleitungselements an die Messzelle im Inneren des Waagengehäuses weitergeleitet wird.

Die Erfindung nimmt dabei bewusst die Belastung des Lasteinleitungselements in Kauf, um im Gegenzug eine besonders wirksame Abdichtung und gleichzeitig vorzugsweise auch eine sichere und für die Messzelle gefahrlose Arretierung des Lasteinleitungselements erreichen zu können. Gleichzeitig wird das Gegenlager durch das Dichtelement auch in radialer Richtung umlaufend mit einer Andruckkraft beaufschlagt, um es während der Abdichtung sicher zu zentrieren und stabil zu positionieren.

Nach einer vorteilhaften Ausführungsform der Erfindung ist vorgesehen, dass die Halterung Verbindungsmittel aufweist, mit denen sie direkt oder mittelbar mit einem Waagengehäuse verbindbar ist, wobei die Verbindungsmittel dazu ausgebildet sind, die Halterungsöffnung relativ zu einem aus dem Waagengehäuse ragenden Lasteinleitungselement zu zentrieren. Dazu weist die Halterung geeignete Zentriermittel auf, die mit dem Waagengehäuse zusammenwirken können. Dabei kann es sich beispielsweise um einen oder mehrere Zentrierstifte handeln oder einen (vorzugsweise konzentrisch um die Halterungsöffnung ausgebildeten) Zentrierbund, der mit einem komplementär dazu ausgebildeten Abschnitt des Waagengehäuses zusammenwirkt. Zweck der Zentrierung ist die genaue Ausrichtung der Halterungsöffnung bzw. der Halterung relativ zum Waagengehäuse bzw. zum Lasteinleitungselement, welches aus dem Waagengehäuse nach unten herausragt. Die genaue Zentrierung ist wichtig, um im Abdichtzustand eine in Umfangsrichtung möglichst gleichmäßige Beaufschlagung des Gegenlagers durch das Dichtelement sicherzustellen. Außerdem erleichtern die Zentriermittel den einfachen Einbau in der Fertigung sowie den Austausch und Wiedereinbau der Dichtung, ohne dafür Messungen/Justierungen vornehmen zu müssen.

Nach einer besonders bevorzugten Ausführungsform umfassen die Verbindungsmittel ein zentrisch zur Halterungsöffnung ausgebildetes Gewinde für eine Verschraubung mit einem Gegengewinde des Waagengehäuses. Das Gewinde bzw. das Gegengewinde umläuft dabei das Lasteinleitungselement oder eine damit gekoppelte Verlängerung und dient gleichzeitig als Zentrierung von Halterung und Waagengehäuse bzw. Lasteinleitungselement relativ zueinander. Vorzugsweise umfasst die Halterung ein Außengewinde, welches in ein dazu passendes Innengewinde am Waagengehäuse einschraubbar ist, oder umgekehrt. Mittels des Gewindes lässt sich die Halterung als Teil der erfindungsgemäßen Dichtung besonders leicht (ohne Justierung) passgenau relativ zum Waagengehäuse bzw. Lasteinleitungselement einschrauben und dabei zentrieren, also zeitsparend montieren oder demontieren.

Nach einer vorteilhaften Ausführungsform der Erfindung umfasst die Halterung an ihrer dem Gegenlager abgewandten Oberseite einen Boden. Im montierten Zustand der Dichtung ist eine Oberseite des Bodens dem Gehäuse der Waage zugewandt, während auf der dem Waagengehäuse abgewandten Unterseite des Bodens das Dichtelement angeordnet ist. Aus dem Inneren des Dichtelements führt dabei wenigstens ein Zuführkanal, insbesondere eine Bohrung, bis zu einer Mündung auf der Oberseite des Bodens. Der Zuführkanal dient zur vorteilhaften Versorgung bzw. Beaufschlagung des Dichtelements mit dem Fluid durch den Boden hindurch. Die Mündung des Zuführkanals auf der Oberseite des Bodens liegt dabei zwischen zwei die Halterungsöffnung vorzugsweise konzentrisch umlaufenden Dichtmitteln, die vorzugsweise in dafür vorgesehenen Nuten sitzen.

Insbesondere kann es sich bei den Dichtmitteln um O-Ringe handeln, die in die Nuten eingelegt werden können. Durch Verbindung der Halterung mit dem Waagengehäuse (insbesondere über die vorstehend beschriebene Verschraubung) wird der Boden gegen das Waagengehäuse gedrückt, wodurch die Dichtmittel oder die in den Nuten liegenden O-Ringe leicht zusammengepresst werden. Dadurch dichten sie den Bereich der Mündung in radialer Richtung nach außen und innen ab, sodass das Fluid in diesen Richtungen nicht entweichen kann.

Auch mehr als zwei Nuten, die vorzugsweise jeweils konzentrisch zueinander verlaufen und mit dafür geeigneten Dichtmitteln versehen sind, können zweckmäßig sein, um beispielsweise eine besonders gute Abdichtung in radialer Richtung erzielen zu können.

Vorzugsweise begrenzen die Dichtmittel einen in radialer Richtung dazwischen liegenden Ringkanal, in den der wenigstens eine Zuführkanal mündet. Dann kann sich das Fluid für das Dichtelement, wenn es in den Ringkanal eingespeist wird, entlang des Ringkanals ausbreiten und über den wenigstens einen, vorzugsweise mehrere, Zuführkanäle durch den Boden hindurch bis in das Dichtelement einströmen.

Auch mehr als ein solcher Ringkanal kann zweckmäßig sein, um die Versorgung des Dichtelements mit Fluid sicherzustellen. Vorzugsweise verlaufen die mehreren Ringkanäle konzentrisch zueinander und sind in radialer Richtung und/oder durch aus einem Waagengehäuse jeweils in sie hineinführende Gehäusekanäle strömungstechnisch miteinander verbunden.

Denkbar ist ferner, den Ringkanal gleichzeitig so als Aufnahme für die Dichtelemente vorzusehen, dass Nuten für die Aufnahme der Dichtmittel einen Teil des Ringkanals bilden. Denkbar wäre beispielsweise eine die Längsachse umlaufende (vorzugsweise flache und/oder im Querschnitt rechteckige) Nut mit einer inneren und einer äußeren (vorzugsweise zylindrischen) Wandfläche, wobei die Nut den Ringkanal bildet, und gleichzeitig zur Aufnahme von umlaufenden Dichtmitteln (insbesondere O-Ringen) geeignet ist, die beispielsweise an der inneren und äußeren Wandfläche anliegen. Dann müssen für die Dichtmittel keine separaten Nuten vorgesehen werden. Denkbar ist ferner, einen solchen Ringkanal im Bereich der inneren und äußeren Wandfläche zur Aufnahme der Dichtmittel nutartig abgestuft bzw. tiefer zu gestalten als in dem radial dazwischenliegenden, dann den eigentlichen Ringkanal bildenden Abschnitt. Dadurch werden die in die tiefere Stufe eingesetzten Dichtmittel in radialer Richtung noch besser fixiert.

Denkbar ist es auch, in die vorgenannte (vorzugsweise flache und/oder im Querschnitt rechteckige) Nut ein die Nut im Wesentlichen vollständig ausfüllendes Dichtmittel, etwa eine ringförmige Flachdichtung, einzulegen, wobei die Flachdichtung ihrerseits eine die Längsachse Z_{A} umlaufende, ringförmige Ausnehmung aufweisen kann, welche dann den Ringkanal bildet. Die ringförmige Ausnehmung kann die Flachdichtung in Höhenrichtung Z vollständig durchdringen und damit zweiteilen. Sie kann aber stattdessen auch als Nut innerhalb der Flachdichtung ausgebildet sein und diese nicht vollständig durchdringen. In jedem Fall führen von dem so gebildeten Ringkanal ein oder mehrere Zuführkanäle dann in Höhenrichtung Z wieder zum Dichtelement.

Bevorzugt erfolgt die Zufuhr des Fluids in den Ringkanal unmittelbar durch die Wand des Waagengehäuses hindurch. Dazu könnte nach einer Ausführungsform der Erfindung das Fluid für die Dichtung über einen im Waagengehäuse ausgebildeten Gehäusekanal bereitgestellt werden, beispielsweise mit einer bedarfsweise verschließbaren Druckluftanbindung innerhalb des Waagengehäuses. Die Druckluft könnte durch den Gehäusekanal so auf die Unterseite des Waagengehäuses geführt werden, dass er dort im Bereich des Ringskanals aus dem Waagengehäuse mündet. Dann wird das Dichtelement besonders vorteilhaft alleine dadurch an das Fluid, insbesondere die Druckluft angeschlossen, indem die Halterung mit dem Waagengehäuse verschraubt wird. Dadurch wird die zu montierende erfindungsgemäße modulare Dichtung besonders einfach und schnell einsatzfähig. Der Gehäusekanal oder die Druckluftanbindung kann über eine geeignete Steuerung geöffnet oder verschlossen werden, um dadurch das Dichtelement mit Druckluft zu beaufschlagen bzw. aufzublähen oder es zu entspannen oder sogar aktiv zusammenzuziehen.

Alternativ zur Bereitstellung des Fluids über einen Gehäusekanal im Waagengehäuse kann die Halterung bzw. der Ringkanal auch einen geeigneten Anschluss für eine separate Fluidleitung aufweisen, die getrennt vom Waagengehäuse bereitgestellt und angeschlossen wird.

Nach einer vorteilhaften Ausführungsform der Erfindung ist der Ringkanal gemeinsam mit den diesen beidseitig radial begrenzenden Dichtmitteln oder Nuten in dem Boden der Halterung ausgebildet, wobei der Ringkanal und die Nuten auf der dem Gegenlager abgewandten bzw. dem Waagengehäuse zugewandten Oberseite des Bodens eingebracht und nach oben offen ausgebildet sind. Wird die Halterung mit der Unterseite eines Waagengehäuses verbunden, insbesondere verschraubt, dann verschließt das Waagengehäuse mit seiner Unterseite den Ringkanal auf dessen Oberseite und dichtet ihn gleichzeitig über den Kontakt mit den Dichtmitteln in den Nuten auch in radialer Richtung ab. Daher kann, wenn der Ringkanal und die Nuten vollständig im Boden der Halterung ausgebildet sind, das Waagengehäuse an dieser Stelle ohne eigene Nuten oder einen Ringkanal und stattdessen im Wesentlichen eben ausgebildet sein.

Alternativ ist es denkbar, die Nuten und den Ringkanal vollständig in der dem Boden zugewandten Unterseite des Waagengehäuses auszubilden, während die Oberseite des Bodens der Halterung dann als im Wesentlichen ebene Fläche ausgebildet sein kann. Auch dann wird der Ringkanal, wenn die Halterung mit ihrem Boden gegen das Waagengehäuse verschraubt wird, in vertikaler Richtung abgedeckt und in radialer Richtung über die Dichtmittel in den Nuten abgedichtet.

Ferner ist es denkbar, die Nuten im Boden und den Ringkanal im Waagengehäuse oder umgekehrt auszubilden oder gar Nuten und/oder Ringkanal teilweise im Boden und teilweise im Waagengehäuse auszubilden. Entscheidend ist in jedem Fall, dass der Ringkanal durch die Verbindung der Halterung mit dem Waagengehäuse vollständig gebildet und geschlossen bzw. abgedichtet wird.

Schließlich ist in weiterer Alternative denkbar, zwischen Halterung und Waagengehäuse ein flanschartiges Zwischenstück anzuordnen, in welchem die vorbeschriebenen Nuten und/oder der Ringkanal teilweise oder vollständig ausgebildet sind. Durch die Montage des Zwischenstücks zwischen der Oberseite der Halterung und der Unterseite des Waagengehäuses wird ein im Zwischenstück ausgebildeter Ringkanal betriebsbereit verschlossen. Das Zwischenstück kann Zentriermittel (insbesondere einen Zentrierbund oder Zentrierstifte) aufweisen, die mit komplementär dazu ausgebildeten Zentriermitteln an der Halterung und/oder dem Waagengehäuse zusammenwirken. Beispielsweise kann ein an der Halterung vorgesehener Stutzen zur Zentrierung des Zwischenstücks dienen und zugleich mit einem Gewinde zum Einschrauben in ein Gegengewinde im Waagengehäuse versehen sein.

Wie vorstehend beschrieben sind auch bei Verwendung des genannten Zwischenstücks oder für die Ausbildung des Ringkanals im Boden der Halterung oder im Gehäuse der Waage nicht zwingend separate Nuten erforderlich.

Nach einer weiteren vorteilhaften Ausführungsform der Erfindung ist vorgesehen, dass die Dichtfläche (vorzugsweise rotationssymmetrisch) um die Längsachse Z_{A} ausgebildet ist. Zugleich weist sie wenigstens einen schräg zur Längsachse Z_{A} verlaufenden Kontaktbereich auf, an dem das Dichtelement im Abdichtzustand anliegt. Ein solcher schräg geformter Kontaktbereich - im Vergleich zu einer beispielsweise horizontal verlaufenden Dichtfläche - hat mehrere erfindungsgemäße Vorteile.

Einerseits bleiben Verschmutzungen, die ein erfolgreiches Abdichten erschweren, weniger leicht auf der Dichtfläche liegen, sondern gleiten entlang der Schräge herunter, sodass das Dichtelement ohne störende Verschmutzungen sauber an der Dichtfläche anliegen kann.

Zum andern erzeugt das Dichtelement, wenn es mit Fluid beaufschlagt wird und sich dadurch in Z-Richtung nach unten ausdehnt, auf der schrägen Dichtfläche eine Andruckkraft, die sich in eine Komponente in Z-Richtung und eine dazu orthogonal verlaufende, radiale Querrichtung aufteilen lässt. Durch die Beaufschlagung in Querrichtung wird das Gegenlager relativ zum umlaufenden Dichtelement allseitig zentriert und in seiner Querposition genau festgelegt (in entgegengesetzter Richtung von zwei gegenüberliegenden Seiten radial auf das Gegenlager bzw. seine Dichtfläche einwirkende Kräfte heben sich dabei auf).

Die auf das Gegenlager in Z-Richtung einwirkende Kraft kann dazu führen, dass das Gegenlager (und das das Gegenlager tragende Lasteinleitungselement) um ein bestimmtes Maß in Z Richtung bewegt wird. Unter Nutzung dieses Effekts ist nach einer weiteren vorteilhaften Ausführungsform der Erfindung ein entgegen der Z-Richtung wirkender Anschlag vorgesehen, der die Bewegung des Lasteinleitungselements in Z-Richtung konstruktiv begrenzt. Dadurch ergibt sich der besondere Vorteil, dass das Lasteinleitungselement im Abdichtzustand durch das sich aufblähende Dichtelement - gegebenenfalls entgegen einer Federkraft - gegen diesen Anschlag gedrückt und dort gehalten wird. Der Anschlag sorgt dafür, dass eine weiter zunehmende Beaufschlagung oder ein beispielsweise während der Reinigung unabsichtlich erzeugter Schlag auf das Lasteinleitungselement nicht bis an die empfindliche Messzelle im Waagengehäuse weitergeleitet, sondern vom Anschlag abgefangen wird.

Bevorzugt ist der Kontaktbereich so schräg ausgebildet, dass sein Abstand von der Längsachse Z_{A} mit zunehmendem Z-Abstand vom Verschlussmodul zunimmt. Der Kontaktbereich hat dann zumindest abschnittsweise beispielsweise die Form eines Kegels oder einer Pyramide. Er könnte aber auch die Form eines Kugelabschnitts oder einer sonstigen Oberfläche haben, die sich jedenfalls mit zunehmendem Abstand vom Verschlussmodul radial erweitert. Durch diese Form wird sichergestellt, dass der sich eventuell auf dem Kontaktbereich ansammelnde Schmutz auf dem schrägen Kontaktbereich herabgleitet. Er fällt dann beispielsweise seitlich vom Gegenlager herunter, ohne mit der Dichtung in Wechselwirkung treten zu können.

Alternativ wäre es denkbar, den Kontaktbereich im Wesentlichen trichterförmig auszubilden, sodass sich der Kontaktbereich mit zunehmendem Abstand vom Verschlussmodul zur Längsachse hin verjüngt. Dann würden Verschmutzungen in Z Richtung nach unten und gleichzeitig radial nach innen auf dem Kontaktbereich entlang gleiten. Am unteren Ende des Kontaktbereichs könnte eine Öffnung vorgesehen werden, um die Verschmutzungen abzuführen.

Nach einer weiteren vorteilhaften Ausführungsform der Erfindung ist es vorgesehen, dass die Halterung wenigstens einen Stützabschnitt aufweist, um das Dichtelement in radialer Richtung zu stützen oder eine unerwünscht starke Ausdehnung in diese Richtung zu blockieren. Dabei kann es sich um eine vorzugsweise zylinderförmige, konzentrisch zur Längsachse Z_{A} ausgebildete Wandung als innerer Stützabschnitt handeln, der in radialer Richtung zwischen dem Dichtelement und der Längsachse Z_{A} angeordnet ist und dadurch das Dichtelement gegen eine ungewollte Ausdehnung radial nach innen oder gar den unerwünschten Kontakt mit dem Lasteinleitungselement blockiert. Außerdem verhindert oder reduziert der innere Stützabschnitt die Faltenbildung des Dichtelements an dessen radialer Innenseite, wenn es sich aufbläht, denn andernfalls könnte sich das radial nach innen erweiternde Material des Dichtelements stauchen und Falten bilden.

Ergänzend oder alternativ kann ein äußerer Stützabschnitt auf der der Längsachse abgewandten radialen Außenseite des Dichtelements vorgesehen sein. Dieser Stützabschnitt stützt oder blockiert das Dichtelement gegen eine ungewollte Ausdehnung radial nach außen. Auch der äußere Stützabschnitt ist vorzugsweise als eine konzentrisch zur Längsachse Z_{A} verlaufende zylindrische Wandung ausgebildet.

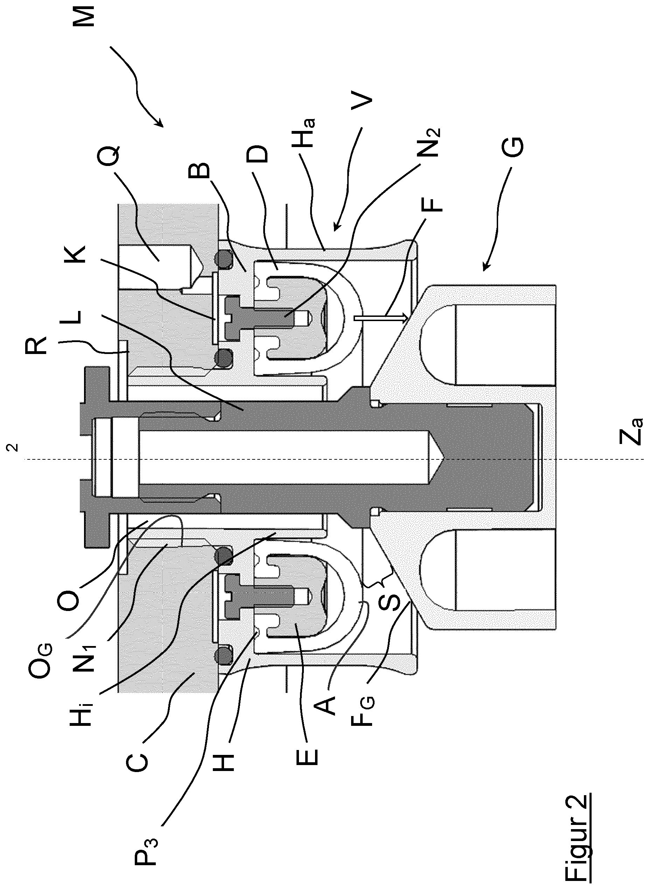

Jeder dieser Stützabschnitte dient auch dazu, die Ausdehnung des Dichtelements hauptsächlich in Z Richtung zu begünstigen und zu führen, während eine radiale Ausdehnung quer dazu möglichst unterbunden werden soll. Beide Stützabschnitte zusammen können beispielsweise als konzentrische zylindrische Abschnitte zwischen sich eine die Längsachse umlaufende Nut bilden, welche das Dichtelement aufnimmt und in Z- Richtung nach oben durch den Boden der Halterung begrenzt wird. Der äußere Stützabschnitt kann nach einer vorteilhaften Ausführungsform dabei in Z Richtung länger ausgebildet sein als der innere Stützabschnitt. Die beiden Stützabschnitte passen sich dadurch vorteilhaft an eine schräg nach außen abfallende Kontaktfläche am Gegenlager an. Um zu vermeiden, dass das sich aufblähende Dichtelement nach dem Kontakt mit der schrägen Dichtfläche in radialer Richtung nach außen abgelenkt bzw. verformt wird, kann daher der äußere Stützabschnitt in Z-Richtung tiefer herunter geführt werden als der innere Stützabschnitt, wie beispielsweise Figur 2 veranschaulicht.

Vorzugsweise ist die Halterung auf ihrer dem Boden abgewandten Unterseite offen, sodass die Ansammlung von Verschmutzung in der Halterung verhindert wird.

Bevorzugt weist das Dichtelement in seinem Inneren einen formstabilen Kern auf, der die Längsachse Z_{A} vorzugsweise ringförmig umläuft. Der Kern dient unter anderem dazu, das Dichtelement in seinem Inneren formstabil zu stützen. Außerdem ist er bevorzugt mit der Halterung verbindbar, insbesondere verschraubbar (Kernverschraubung), um dadurch das Dichtelement an der Halterung zu fixieren. Bevorzugt ist der Kern aus Aluminium gefertigt. Andere Materialien sind ebenfalls denkbar und die Herstellung der erfindungsgemäßen Dichtung oder ihrer einzelnen Komponenten oder Kombinationen daraus kann beispielsweise durch Drehen, Fräsen, Spritzgießen oder im 3-D Druck (additive Fertigung) erfolgen.

Ebenfalls vorzugsweise stellt der Kern wenigstens eine fluidische Verbindung bereit, die aus dem Inneren des Dichtelements bis zu einem in der Halterung ausgebildeten, vorstehend bereits erwähnten Zuführkanal führt. Bevorzugt mündet ein Ende des Zuführkanals in radialer Richtung zwischen einer maximalen äußeren und einer minimalen inneren Abmessung des ringförmigen Kerns, höchst vorzugsweise auf einem Teilkreis mit Radius r genau mittig dazwischen (Mittenposition).

Nach einer vorteilhaften Ausführungsform der Erfindung ist es außerdem vorgesehen, dass eine dem Gegenlager zugewandte Unterseite des Kerns im vertikalen Querschnitt wellenförmig ausgebildet ist. Die Wellenform wird dabei so gewählt, dass eine durch den Kern in das Dichtelement hineinführender Bohrung, die zur Befestigung des Kerns an der Halterung mittels Kernverschraubung oder als Zuführkanal dient, in einem Wellental mündet. Dadurch wird der Kontakt oder gar eine Beschädigung vermieden zwischen dem im Ruhezustand entspannten Material des Dichtelements und der möglicherweise scharfkantigen Bohrungsmündung der Bohrung bzw. des Kanals, da die an das Wellental angrenzenden, bevorzugt abgerundeten Wellenberge das Dichtelement beidseitig des Kanals bzw. der Bohrung abstützen und von dieser fernhalten. Vorzugsweise liegt ein Wellental an der Mittenposition, wenn dort ein Zuführkanal oder eine Befestigungsbohrung mündet. Aufgrund der abgerundeten Wellenberge des Kerns hat dieser keine scharfen Kanten oder Vorsprünge, die das Dichtelement insbesondere im drucklosen Zustand gefährden könnten.

Um die Verformung des Dichtelements gezielt beeinflussen zu können, hat dieses nach einer vorteilhaften Ausführungsform der Erfindung eine spezielle Beschaffenheit. Demnach umfasst das - vorzugsweise einstückig ausgebildete - Dichtelement einen dem Gegenlager zugewandten, den Dichtabschnitt umfassenden Kopfbereich und radial nach innen und außen an den Kopfbereich angrenzende Wandbereiche. Die Wandbereiche erstrecken sich vorwiegend in Z-Richtung, während der Kopfbereich im Wesentlichen quer dazu ausgebildet ist. Dabei ist die Wandstärke des Dichtelements am Kopfbereich erfindungsgemäß größer als an wenigstens einem Wandbereich. Der somit dünnere Wandbereich ist dann gegen Zugkräfte in Höhenrichtung weniger stabil bzw. leichter in Z- Richtung dehnbar, als dies für den dickeren und daher stabileren Kopfbereich der Fall ist. Das gilt insbesondere dann, wenn das Dichtelement aus homogenem Material gebildet ist. Das führt bei Fluidbeaufschlagung des Dichtelements erfindungsgemäß dazu, dass überwiegend der wenigstens eine dünnere Wandbereich unter weiterer Reduzierung seiner Wandstärke in Z-Richtung zum Gegenlager hin gestreckt wird, sich der Kopfbereich also im Wesentlichen in gerader Z-Richtung zum Gegenlager hin bewegt oder verschiebt. Das wird besonders vorteilhaft dann erreicht, wenn beide Wandbereiche zu beiden Seiten des Kopfbereichs nach diesem Prinzip ausgebildet sind. Das Dichtelement dehnt sich dann quasi parallel zur Z-Richtung nach unten aus. Die gegebenenfalls vorgesehenen, vorstehend beschriebenen Stützabschnitte verhindern gleichzeitig eine radiale Ausdehnung des Dichtelements.

Eine erfindungsgemäße Waage umfasst eine vorstehend beschriebene Dichtung und ein Lasteinleitungselement, welches sich berührungslos durch die Halterungsöffnung erstreckt und mit dem Gegenlager verbunden ist. Der Dichtabschnitt verhindert dabei im Abdichtzustand durch Beaufschlagung der Dichtfläche ein Eindringen von Fremdstoffen in das Waagengehäuse. Ein vorzugsweise vorgesehener Anschlag, gegen den das Gegenlager oder das Lasteinleitungselement bewegbar ist, schützt eine im Waagengehäuse angeordnete Meßzelle vor ungewollten oder schlagartigen, hohe Belastungen. Die Waage kann insbesondere nach dem Prinzip der elektromagnetischen Kraftkompensation arbeiten. Andere Meßprinzipien, wie beispielsweise Dehnungsmessstreifen oder schwingende Saiten, sind ebenfalls denkbar.

Das Dichtelement ist elastisch ausgeführt, um sich unter Druckbeaufschlagung bis in den Abdichtzustand aufzublähen bzw. auszudehnen. Im entspannten Zustand dagegen zieht es sich vorzugsweise jedenfalls soweit zusammen, dass das Dichtelement das Gegenlager nicht mehr berührt, höchst vorzugsweise unter Erzeugung eines Spaltes mit einer vorgebbaren Mindestbreite.

Um sicherzustellen, dass sich das Gegenlager im Ruhezustand frei bewegen kann bzw. nicht mehr vom Dichtelement kontaktiert wird, ist nach einer weiteren vorteilhaften Ausführungsform der Erfindung vorgesehen, dass das Innere des Dichtelements mit einem Unterdruck relativ zum Umgebungsdruck beaufschlagbar ist. Das Zusammenziehen des Dichtelements für den Übergang in den Ruhezustand kann so aktiv betrieben werden, da das in das Dichtelement eingebrachte Fluid daraus gezielt abgesaugt wird. Dadurch wird eine von der Dichtfläche weggerichtete Zugkraft in dem die Dichtfläche kontaktierenden Dichtabschnitt erzeugt, und ein am Gegenlager eventuell anhaftende Abschnitt des Dichtelements kann dadurch gezielt davon abgehoben bzw. getrennt werden, um Kraftnebenschluss zu vermeiden. Eine Beschädigungsgefahr für das Dichtelement besteht insbesondere dann nicht, wenn der Kern wellenförmig und ohne scharfe Kanten ausgebildet ist.

Eine Überwachung des in dem Dichtelement vorherrschenden Drucks kann außerdem dazu verwendet werden, eine defekte Dichtung oder deren Anhaftung am Gegenlager zu erkennen.

Die erfindungsgemäße modulare Dichtung ist ein kompaktes, platzsparendes Modul. Es wird für jede Spur einer Waage als montagefertiger Bausatz bereitgestellt und ist in wenigen Sekunden einsatzfertig am Waagengehäuse montiert. Eine spezielle Justage oder externe Prüfung ist nicht erforderlich, lose Einzelteile sind nicht vorhanden. Das Modul umfasst für den schnellen und positionsgenauen Einbau der Halterung vorzugsweise bereits einbaufertig ein Gewinde zum zentrierenden Einschrauben in ein Waagengehäuse, zwei O-Ringe zur Abdichtung des Ringkanals am Waagengehäuse und ein Dichtelement mit innenliegendem Kern. Vorzugsweise sind auf der Außenseite der Halterung außerdem Schlüsselflächen vorgesehen, um die Halterung mit gängigen Werkzeugen (Maulschlüsseln, Steckschlüsseln) in das Waagengehäuse einschrauben und vorzugsweise mit einem genau definierten Drehmoment anziehen zu können.

Die erfindungsgemäße Dichtung ist vorgesehen für Waagen mit Unterflurlastabgang, bei denen sich also das Lasteinleitungselement typischerweise in vertikaler Richtung senkrecht nach unten aus dem Waagengehäuse heraus erstreckt. Grundsätzlich ist die Verwendung dieser Dichtung nach einer Alternative aber auch für Waagen geeignet, bei denen das Lasteinleitungselement in horizontaler Richtung seitlich aus dem Waagengehäuse ragt. Vorzugsweise wird eine von der Waage zu erfassende Last dann auch in horizontaler Richtung bzw. entlang der Längserstreckungsrichtung des Lasteinleitungselement in das Waagengehäuse eingeleitet. Die in den Figuren dargestellten Ausführungsformen müssen dazu gedanklich lediglich um 90° auf die Seite gedreht werden.

Die erfindungsgemäße Dichtung eignet sich besonders vorteilhaft auch für mehrspurige Waagen, die jeweils eng aneinander liegen. Da sich das Dichtelement jeweils in vertikaler Richtung ausdehnt, beansprucht es quer dazu, also in Richtung der benachbarten Waagen, vorteilhafter Weise nur geringen Ausdehnungsraum. Die Montage der Dichtung kann mittels einfacher, in Höhenrichtung Z mit der Halterung verbindbaren Werkzeugen, etwa einem Steckschlüssel, erfolgen, ohne dazu einen Raum seitlich neben dem Waagengehäuse für das Werkzeug oder dessen Handhabung nutzen zu müssen. Die Halterung kann dafür geeignete Schlüsselflächen aufweisen.

Das Dichtelement (mit innen liegendem Kern) kann Gegenstand einer Teilanmeldung sein, unabhängig von einer Waage oder dem Gegenlager. Alle in der vorliegenden Anmeldung (auch in der Figurenbeschreibung und im Anspruch 15) beschriebenen Merkmale des Dichtelements und des Kerns treffen einzelnen oder in beliebiger Kombination darauf zu. Zu diesen Merkmalen zählt insbesondere:
- Das Dichtelement ist rotationssymmetrisch
- Das Dichtelement ist ein aufblasbarer Wulst
- Das Dichtelement weist einen Kopfbereich und wenigstens eine, vorzugsweise zwei, Wandbereiche mit relativ zum Kopfbereich reduzierter Wandstärke auf.
- Der Kern ist zur Fixierung des Dichtelements an einer Halterung ausgebildet.
- Der Kern übergreift zur Fixierung des Dichtelements wenigstens einen Montageabschnitt des Dichtelements auf dessen Innenseite mit einem komplementär zum Montageabschnitt geformten Vorsprung.
- Das Dichtelement weist auf einer dem Kern abgewandten, vorzugsweise ebenen Außenfläche wenigstens eine Vertiefung in Höhenrichtung Z aufweist, die einem Vorsprung des Kerns in Höhenrichtung Z gegenüberliegt. Bei der Befestigung, insbesondere Verschraubung des Kerns mit einer Halterung drückt der Vorsprung auf der Innenseite des Dichtelements auf den Abschnitt, der außenseitig die Vertiefung aufweist. Dadurch wird die Vertiefung aufgeweitet und abgeflacht, vorzugsweise bis sie verschwindet und eine ebene Anlagefläche an der Halterung bildet. Dadurch wird die Klemmkraft in radialer Richtung breiter verteilt.
- Der Kern weist eine wenigstens abschnittsweise wellenförmige Oberfläche auf, um einen scharfkantigen Kontakt mit der Innenseite des Dichtelements zu vermeiden.
- Der Kern weist wenigstens eine aus dem Inneren des Dichtelements herausführende Bohrung auf, mit welcher das Dichtelement mit Fluid versorgt oder an einer Halterung befestigt werden kann.

Nachfolgend soll eine Ausführungsform der Erfindung anhand von Figurenbeispielen näher erläutert werden. Dabei zeigt
- Figur 1: eine Waage mit zwei Unterlastabgängen und zwei erfindungsgemäßen Dichtungen,
- Figur 2: eine vereinfachte Schnittdarstellung einer erfindungsgemäßen modularen Dichtung im Ruhezustand,
- Figur 3: eine vereinfachte Detailansicht der Halterung mit darin eingesetztem Dichtelement, und
- Figur 4: eine teilgeschnittene Schrägansicht der Halterung.

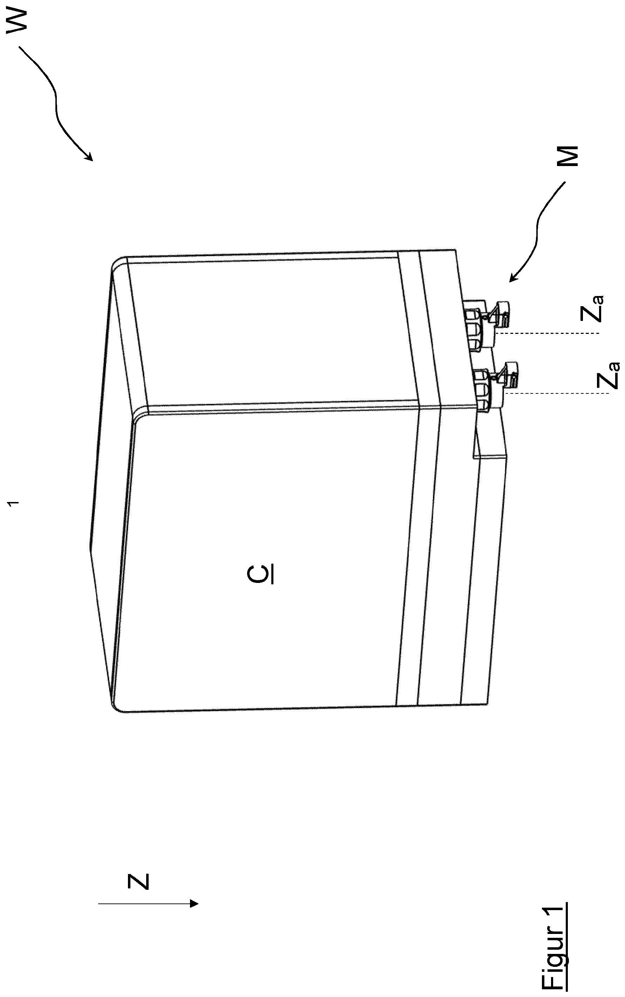

Figur 1 zeigt in perspektivischer Darstellung das Gehäuse C einer mehrspurige (zweispurige) Waage W, die zwei im Inneren des Gehäuses C angeordnete und nicht näher dargestellte Sensoren zur Erfassung einer Gewichtskraft aufweist. Die Waage ist mit Unterflurlastabgang ausgestattet, sodass für jeden Sensor ein eigenes Lasteinleitungselement auf einer Unterseite der Waage durch eine eigene Gehäuseöffnung O_{G} des Gehäuses C nach unten herausragt, um außerhalb des Gehäuses mit einer zu messenden Kraft beaufschlagt zu werden. Für jedes Lasteinleitungselement (auch Lastaufnehmer, Lasteinleitungsbolzen oder Lastbolzen genannt) ist eine erfindungsgemäße modulare Dichtung M vorgesehen, die sich im Wesentlichen rotationssymmetrisch jeweils um eine zugehörige, in Höhenrichtung Z verlaufende Längsachse Z_{A} erstreckt.

Figur 2 zeigt in geschnittener Darstellung Einzelheiten einer erfindungsgemäßen modularen Dichtung M, die mit einem unteren, waagerechten Abschnitt des Gehäuses C der Waage verbunden ist. Durch die Gehäuseöffnung O_{G} in der Unterseite des Gehäuses C ragt ein Lasteinleitungselement L in Höhenrichtung Z aus dem Gehäuse heraus nach unten. Über nicht näher dargestellte Elemente kann eine zu messende Kraft als Zugkraft in Höhenrichtung Z in das Lasteinleitungselement L eingebracht und von diesem nach oben in das Innere des Waagengehäuses C bis zu einem Kraftsensor geleitet werden. Das Lasteinleitungselement L umfasst in dieser Ausführungsform wenigstens zwei in Höhenrichtung Z miteinander verschraubbare Elemente.

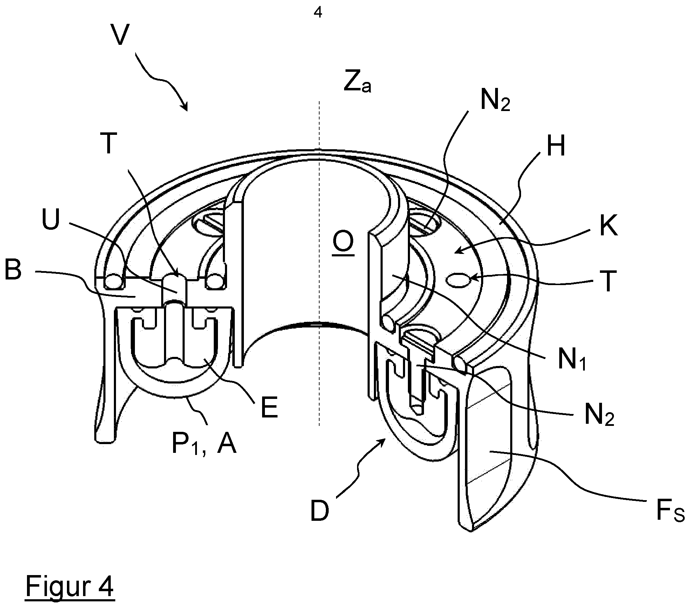

Ein Verschlussmodul V umfasst als Teil der modularen Dichtung eine Halterung H, die rotationssymmetrisch um die Längsachse Z_{A} ausgebildet ist und einen dem Waagengehäuse C zugewandten, flanschartigen Boden B aufweist. An einem vom Boden B zentrisch nach oben ragenden Stutzen ist ein Gewinde N₁ (Außengewinde) vorgesehen, wie auch in Figur 4 zu sehen ist. Der Stutzen ist in ein dazu passendes Gegengewinde (Innengewinde) im Boden des Gehäuses C eingeschraubt. Durch diese Verschraubung wird die Halterung H relativ zur Gehäuseöffnung O_{G} und zum Lasteinleitungselement L automatisch zentriert. Um die Halterung H besonders einfach und vorzugsweise mit einem vorgegeben Drehmoment in das Waagengehäuse C einschrauben zu können, sind an ihrem äußeren Umfang Schlüsselflächen S_{F} vorgesehen zum Eingriff mit einem geeigneten Werkzeug, insbesondere Maulschlüssel oder Steckschlüssel. Siehe hierzu Figur 4.

Auf der dem Waagengehäuse C abgewandten Unterseite des Bodens B sind zwei konzentrisch zur Längsachse Z_{A} in Höhenrichtung Z verlaufende, zylindrische Stützabschnitte Hᵢ, H_{A} ausgebildet, die in radialer Richtung zwischen sich eine die Längsachse umlaufende Nut bilden. In dieser Nut ist ein elastisches, mit Fluid beaufschlagbares, ringförmiges, wulstartiges Dichtelement D angeordnet. Der innere Stützabschnitt Hᵢ begrenzt die Halterung H in radialer Richtung nach innen und dient insbesondere dazu, eine Ausdehnung des Dichtelements D in Richtung auf das Lasteinleitungselement L zu verhindern. Der äußere Stützabschnitt Hₐ, der in Höhenrichtung Z nach unten über das Dichtelement D hinausragt, begrenzt die Halterung H in radialer Richtung nach außen und vermeidet die Ausdehnung des Dichtelements D in diese Richtung. Beide Stützabschnitte dienen außerdem dazu, das Dichtelement D in Höhenrichtung Z zu stützen und zu führen.

Unterhalb der Halterung H erstreckt sich ein rotationssymmetrisch um die Längsachse Z_{A} ausgebildetes Gegenlager G, welches über eine nicht näher dargestellte Schraubverbindung an einem unteren freien Ende des Lasteinleitungselements L befestigt ist. Das Gegenlager weist eine der Halterung zugewandte, konische Dichtfläche F_{G} auf. Mit zunehmendem Z-Abstand von der Halterung H nimmt der Radius des Gegenlagers G bzw. der Dichtfläche F_{G} zu.

In dem in Figur 2 dargestellten Ruhezustand besteht zwischen dem Dichtelement D und der Dichtfläche F_{G} ein Spalt S. In diesem Zustand kann sich das Lasteinleitungselement L mit dem Gegenlager G relativ zur Halterung H kraftnebenschlussfrei in Höhenrichtung Z bewegen und eine Last ungestört in das Innere des Waagengehäuses C übertragen. Zu Wartungs- oder Reinigungszwecken kann das Innere des Waagengehäuses abgedichtet und geschützt werden, indem der Spalt S verschlossen wird. Dies geschieht erfindungsgemäß dadurch, dass das in der Halterung H eingesetzte Dichtelement L mit einem Fluid beaufschlagt wird und sich dadurch in Höhenrichtung Z bzw. in Richtung auf das Gegenlager G so weit ausdehnt, bis es mit einem Dichtabschnitt A an der Dichtfläche F_{G} anliegt bzw. diese mit einer Andruckkraft F beaufschlagt. Dann befindet sich die modulare Dichtung im Abdichtzustand, und die Gehäuseöffnung O_{G} ist aufgrund des verschlossenen Spalts S gegenüber der Umgebung abgedichtet. Vorzugsweise wird das Gegenlager G dabei so weit nach unten verschoben, dass das Lasteinleitungselement L mit einem erweiterten Flansch gegen einen an der Innenseite des Waagengehäuses C vorgesehenen Anschlag R stößt und dadurch in Höhenrichtung fixiert wird.

Wird der Fluid-Druck im Inneren des Dichtelements L wieder reduziert, dann zieht sich der Dichtabschnitt A des Dichtelements L von der Dichtfläche F_{G} in entgegengesetzter Höhenrichtung Z wieder nach oben zurück, bildet dadurch wieder den Spalt S und gibt damit das Gegenlager mit seinem Lasteinleitungselement L zur regulären Benutzung frei.

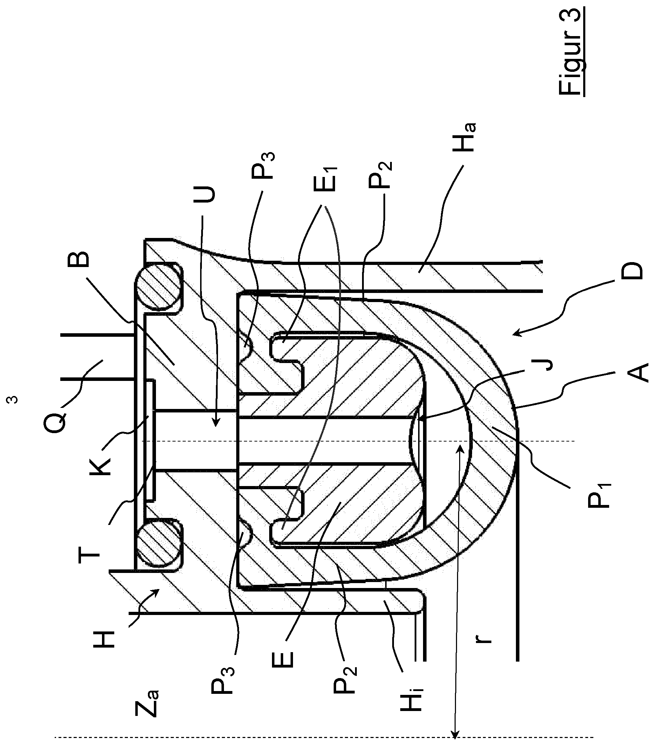

Die Versorgung des Dichtelements mit einem Fluid (im einfachsten Fall mit Druckluft) soll insbesondere anhand der Figur 3 erläutert werden. Gezeigt ist dort in vergrößerter Schnittdarstellung der Teil der Halterung H, der sich mit Blick auf Figur 2 dort rechts von der Längsachse Z_{A} befindet. Zu sehen ist das zwischen dem inneren Stützelement Hᵢ und dem äußeren Stützelement Hₐ eingefasste, elastische Dichtelement D, welches sich als ringförmiger Wulst um die Längsachse Z_{A} erstreckt und dabei auf der dem Boden B abgewandten Unterseite einen kalottenartigen Querschnitt aufweist. In diesem Bereich umfasst das Dichtelement D einen Kopfbereich P₁, der in radialer Richtung nach innen und nach außen jeweils einstückig in einen Wandbereich P₂ übergeht. Im Kopfbereich P₁ hat das Dichtelement D eine größere Wandstärke als in den beiden Wandbereichen P₂. Aufgrund der geringeren Wandstärke sind die Wandbereiche P₂ leichter in Z-Richtung dehnbar als der Kopfbereich P₁. Bei Druckbeaufschlagung des Dichtelements D werden die Wandbereiche P₂ daher bevorzugt in Höhenrichtung Z nach unten gestreckt, zusätzlich geführt durch die Stützabschnitte Hᵢ und Hₐ. Dadurch bewegt sich der Kopfbereich P₁ mit seinem Dichtabschnitt A im Wesentlichen in Höhenrichtung Z gerade nach unten auf das Gegenlager G zu.

Im Inneren des Dichtelements D ist, wie in den Figuren 2, 3 und 4 zu sehen ist, ein ringförmiger Kern E angeordnet, der insbesondere dazu dient, das Dichtelement D zu stabilisieren und an seinem oberen Ende an dem Boden B zu befestigen. Auf einem Teilkreis mit dem Radius r sind in Umfangsrichtung mehrere vertikale Bohrungen in dem Kern E vorgesehen. Einige der Bohrungen sind mit einem Gewinde ausgestattet, um den Kern E mit der Halterung H zu verschrauben (Kernverschraubung N₂).

Auf dem vorgenannten Teilkreis sind darüber hinaus mehrere Durchgangsbohrungen in Höhenrichtung Z vorgesehen, die aus dem Inneren des Dichtelements D durch den Kern E und den Boden der Halterung H in Richtung auf die Unterseite des Waagengehäuses C führen, wie insbesondere in Figur 3 und im linken Teil der Figur 4 zu sehen ist. Diese Bohrungen bilden jeweils einen Zuführkanal U, durch welchen das Innere des Dichtelements D mit Fluid versorgt und beaufschlagt werden kann. Auf der Oberseite des Bodens B mündet der Zuführkanal U an der Mündung T in einen konzentrisch zur Längsachse Z_{A} ausgebildeten Ringkanal K. Im Beispiel der Figuren 3 und 4 ist dieser Ringkanal K im Boden der Halterung H vorgesehen. Figur 2 zeigt alternativ dazu die Ausbildung des Ringkanals K in der Unterseite des Waagengehäuses C.

Über einen im Waagengehäuse C ausgebildeten Gehäusekanal Q kann Druckluft in den Ringkanal K eingespeist werden, von wo sie über die einzelnen Zuführkanäle U durch den Kern E hindurch bis in das Innere des Dichtelements D gelangt. In radialer Richtung ist der Ringkanal K mithilfe zweier O-Ringe abgedichtet, die in zwei konzentrisch zueinander ausgebildeten Nuten angeordnet sind. Die Nuten begrenzen die maximal nutzbare Größe des Ringkanals K in radialer Richtung nach außen und innen und sind in der Oberseite des Bodens B eingebracht. (Alternativ ist es denkbar, den Ringkanal K und/oder die Nuten teilweise oder vollständig in der Unterseite des Waagengehäuses C oder einem dazwischen liegenden, flanschartigen Zwischenstück auszubilden. Dann könnte bspw. die Oberseite des Bodens B - abgesehen von den Kernverschraubungen N₂ und den Zufuhrkanälen U - im Wesentlichen eben ausgebildet werden).

Wie in den Figuren 2 und 3 zu sehen ist, mündet der von oben aus dem Waagengehäuse C kommende Gehäusekanal Q in radialer Richtung zwischen den beiden O-Ringen bzw. Nuten in den Ringkanal K. Die O-Ringe werden im eingebauten Zustand der modularen Dichtung von der Unterseite des Waagengehäuses C und der Oberseite des Bodens B beaufschlagt und dichten dadurch den Ringkanal K vollständig ab.

In Figuren 2 bis 4 ist zu erkennen, dass der Kern E auf seiner dem Kopfbereich P₁ zugewandten Unterseite wellenförmig ausgebildet ist. Ein auf dem Teilkreis mit dem Radius r vorgesehenes Wellental J grenzt dabei in radialer Richtung nach innen und außen an jeweils einen Wellenberg. Die bevorzugt abgerundeten Wellenberge sollen verhindern, dass der Kopfbereich P₁ des Dichtelements D mit seiner dem Kern E zugewandten Innenseite den möglicherweise scharfkantigen Bereich einer Bohrung (für eine Kernverschraubung N₂ oder einen Zuführkanal U) berührt und dadurch Schaden nimmt. Daher münden diese Bohrungen im Wellental J, welches der Kopfbereich P₁ im drucklosen Zustand, abgestützt durch die angrenzenden Wellenberge, nicht berühren kann.

Im Abdichtzustand (nicht im Bild dargestellt) wird das Lasteinleitungselement L der Waage mittels der Kraft F des aufgeblasenen Dichtelements D vorzugsweise gegen die Kraft einer (nicht dargestellte) Feder, nach unten in Höhenrichtung Z bewegt, vorzugsweise gegen den Anschlag R. Durch eine speziell gewählte oder eingestellte Federkraft wird die im Inneren der Waage befindliche Mechanik/Sensorik nur wenig belastet, maximal mit dieser Federkraft.

Figur 3 zeigt zwei am Kern E vorgesehene, in Höhenrichtung Z verlaufende ringförmige Vorsprünge E₁. Auf der Oberseite des Dichtelements D sind zwei ringförmige Vertiefungen P₃ im Dichtelement vorgesehen, welche den Vorsprüngen E₁ in Höhenrichtung Z gegenüberliegen. Durch die Verschraubung des Kerns E mit der Halterung H drücken die Vorsprünge E₁ in Höhenrichtung Z aufwärts auf das Dichtelement D, wodurch die Vertiefungen P₃ sich abflachend verformen und gleichzeitig die Klemmkraft auf die Halterung H in radialer Richtung ausweiten bzw. verbreitern und dadurch vergleichmäßigen. Ohne solche Vertiefungen P₃ könnte es zu einer hohen Klemmkraft auf einem relativ schmalen ringförmigen Bereich oberhalb der Vorsprünge E₁ im Dichtelement D kommen, was durch die Vertiefungen P₃ somit verhindert wird. Zugleich bewirken die Vorsprünge E₁ auch eine radiale Stabilisierung des Dichtelements D, da dieses die Vorsprünge E₁ in radialer Richtung beidseitig umgreift.

### Bezugszeichenliste

- A: Dichtabschnitt des Dichtelements
- B: Boden
- C: Waagengehäuse
- D: Dichtelement
- E: Kern
- E₁: Vorsprung am Kern E
- F: Kraft
- F_{G}: Dichtfläche
- F_{S}: Schlüsselfläche
- G: Gegenlager
- H: Halterung
- Hₐ: äußerer Stützabschnitt
- Hᵢ: innerer Stützabschnitt
- J: Wellental
- K: Ringkanal
- L: Lasteinleitungselement
- M: Modulare Dichtung
- N₁: Gewinde
- N₂: Kernverschraubung
- O: Halterungsöffnung
- O_{G}: Gehäuseöffnung
- P₁: Kopfbereich des Dichtelements
- P₂: Wandbereich des Dichtelements
- P₃: Vertiefung im Dichtelement D
- Q: Gehäusekanal
- r: Teilkreis-Radius
- R: Anschlag
- S: Spalt
- T: Mündung
- U: Zuführkanal
- V: Verschlussmodul
- W: Waage
- Z: Höhenrichtung
- Z_{A}: Längsachse in Höhenrichtung

## Patentansprüche

1. Modulare Dichtung (M) für eine Waage, deren Lasteinleitungselement (L) entlang einer vertikalen Höhenrichtung (Z) nach unten aus einem Gehäuse (C) der Waage herausragt,
a) die Dichtung (M) umfassend ein bevorzugt rotationssymmetrisches Verschlussmodul (V), welches sich um eine in Höhenrichtung (Z) verlaufende Längsachse (Z_{A}) erstreckt und eine zentrische Halterungsöffnung (O) aufweist, um das Lasteinleitungselement (L) durch sich hindurchragen zu lassen,
b) wobei das Verschlussmodul (V) eine Halterung (H) und ein von der Halterung (H) aufgenommenes, mit Fluid aufblasbares, dehnbares Dichtelement (D) aufweist, welches durch Änderung seines Innendrucks wahlweise aus einem Ruhezustand in einen Abdichtzustand oder zurück überführbar ist,
c) die Dichtung (M) ferner umfassend ein Gegenlager (G) zur Befestigung am Lasteinleitungselement (L),
d) wobei ein Dichtabschnitt (A) des Dichtelements (D) dazu ausgebildet ist, im Abdichtzustand an einer Dichtfläche (F_{G}) des Gegenlagers (G) anzuliegen und dadurch einen im Ruhezustand zwischen Dichtfläche (F_{G}) und Dichtelement (D) bestehenden Spalt (S) abzudichten,
**dadurch gekennzeichnet,**
e) **dass** die Dichtfläche (F_{G}) in Höhenrichtung (Z) so unterhalb des Dichtelements (D) angeordnet ist, dass sich das Dichtelement (D) beim Übergang vom Ruhezustand in den Abdichtzustand durch seine in Höhenrichtung (Z) erfolgende Ausdehnung mit seinem Dichtabschnitt (A) an die darunter liegende Dichtfläche (F_{G}) anlegt.

2. Modulare Dichtung (M) nach dem vorhergehenden Anspruch, **dadurch gekennzeichnet, dass** die Halterung (H) Verbindungsmittel aufweist, mit denen sie direkt oder mittelbar mit einem Waagengehäuse (C) verbindbar ist, wobei die Verbindungsmittel dazu ausgebildet sind, die Halterungsöffnung (O) der Halterung (H) relativ zu einem aus dem Waagengehäuse (C) ragenden Lasteinleitungselement (L) und/oder zur Gehäuseöffnung zu zentrieren.

3. Modulare Dichtung (M) nach dem vorhergehenden Anspruch, wobei die Verbindungsmittel ein zentrisch zur Halterungsöffnung (O) ausgebildetes Gewinde (N₁) für eine Verschraubung mit einem Gegengewinde des Waagengehäuses (C) umfassen, und wobei das Gegengewinde das Lasteinleitungselement (L) umläuft und die Zentrierung mithilfe der Verschraubung erfolgt.

4. Modulare Dichtung (M) nach einem der vorigen Ansprüche, wobei die Halterung (H) an ihrer dem Gegenlager (G) abgewandten Oberseite einen Boden (B) aufweist, und wobei aus dem Inneren des Dichtelements (D) wenigstens ein Zuführkanal (U), insbesondere eine Bohrung, bis zu einer Mündung (T) auf der Oberseite des Bodens führt und wobei die Mündung (T) in radialer Richtung zwischen zwei die Halterungsöffnung (O) und/oder die Gehäuseöffnung (O_{g}) vorzugsweise konzentrisch umlaufenden Dichtmitteln und/oder Nuten liegt.

5. Modulare Dichtung (M) nach dem vorhergehenden Anspruch, wobei die Dichtmittel, die vorzugsweise in die Nuten eingesetzt und weiterhin vorzugsweise als O-Ringe ausgebildet sind, einen dazwischen liegenden Ringkanal (K) radial begrenzen, und wobei die Nuten und/oder der zwischen den Dichtmitteln liegende Ringkanal (K)
a) in der Oberseite des Bodens (B)
und/oder
b) in einer dem Boden (B) zugewandten Unterseite eines Waagengehäuses
ausgebildet sind.

6. Modulare Dichtung (M) nach dem vorhergehenden Anspruch, wobei der Ringkanal (K) durch das Verbinden, insbesondere das Verschrauben bzw. Einschrauben der Halterung (H) mittels Gewinde (N₁) in ein Waagengehäuse (C) abgedichtet wird.

7. Modulare Dichtung (M) nach einem der vorhergehenden Ansprüche, **dadurch gekennzeichnet, dass** die Dichtfläche (F_{G}) um die Längsachse (Z_{A}) verläuft und wenigstens einen schräg zur Längsachse (Z_{A}) verlaufenden Kontaktbereich aufweist, an dem der Dichtabschnitt (A) im Abdichtzustand anliegt.

8. Modulare Dichtung (M) nach einem der vorhergehenden Ansprüche, **dadurch gekennzeichnet, dass** das Dichtelement (D) im Abdichtzustand das Gegenlager (G) mit einer Kraft sowohl radial in Richtung auf die Längsachse (Z_{A}) als auch orthogonal dazu in Höhenrichtung (Z) beaufschlagt.

9. Modulare Dichtung (M) nach einem der dem vorhergehenden Ansprüche,
**dadurch gekennzeichnet, dass** die Halterung (H)
a) einen inneren, vorzugsweise zylinderförmigen Stützabschnitt (Hᵢ) aufweist, welcher das Dichtelement (D) gegen eine ungewollte Ausdehnung radial nach innen blockiert und abstützt, und/oder
b) einen äußeren, vorzugsweise zylinderförmigen Stützabschnitt (Hₐ) aufweist, welcher das Dichtelement (D) gegen eine ungewollte Ausdehnung radial nach außen blockiert und abstützt.

10. Modulare Dichtung (M) nach einem der vorigen Ansprüche), **dadurch gekennzeichnet, dass** das Dichtelement (D) als ein die Längsachse (Z_{A}) umlaufender, aufblasbarer Wulst oder Schlauch ausgebildet ist, und in seinem Inneren einen formstabilen, die Längsachse (Z_{A}) vorzugsweise ringförmig umlaufenden Kern (E) aufweist,
a) wobei der Kern mit der Halterung (H) verbindbar, insbesondere mittels einer Kernverschraubung (N₂) verschraubbar ist, um dadurch das Dichtelement (D) an der Halterung (H) zu fixieren, und/oder
b) wobei der Kern (E) wenigstens eine fluidische Verbindung bereitstellt aus dem Inneren des Dichtelements (D) bis zu einem in der Halterung (H) ausgebildeten Zuführkanal (U), und/oder
c) wobei eine dem Gegenlager (G) zugewandte Unterseite des Kerns (E) im vertikalen Querschnitt wellenförmig ausgebildet ist, und wobei eine als Wellental (J) in den Kern (E) eingearbeitete Vertiefung den gleichen radialen Abstand zur Längsachse (Z_{A}) hat wie eine den Kern (E) mit der Halterung (H) verbindende Kernverschraubung (N₂), und/oder
d) wobei das Dichtelement einen dem Gegenlager (G) zugewandten, den Dichtabschnitt (A) umfassenden Kopfbereich (P₁) und radial nach innen und außen an den Kopfbereich (P₁) angrenzende Wandbereiche (P₂) aufweist, wobei die Wandstärke des Dichtelements am Kopfbereich (P₁) größer ist als an wenigstens einem Wandbereich (P₂), so dass bei Fluidbeaufschlagung des Dichtelements (D) überwiegend der wenigstens eine Wandbereich (P₂) unter Reduzierung seiner Wandstärke in Z-Richtung zum Gegenlager (G) hin gestreckt wird.

11. Waage (W) mit einer Dichtung (M) nach einem der vorhergehenden Ansprüche und mit einem Lasteinleitungselement (L), welches sich berührungslos durch die Halterungsöffnung (O) erstreckt und mit dem Gegenlager (G) verbunden ist, wobei der Dichtabschnitt (A) im Abdichtzustand durch Beaufschlagung der Dichtfläche (F_{G}) ein Eindringen von Fremdstoffen in die Halterungsöffnung (O) sowie in das Waagengehäuse (C) teilweise oder vollständig verhindert.

12. Waage nach dem vorhergehenden Anspruch, **dadurch gekennzeichnet, dass** die Dichtung (D) dazu ausgebildet ist, das Lasteinleitungselement (L) mittels der Kraft (F), vorzugsweise gegen eine Federkraft, in Höhenrichtung (Z) zu bewegen, vorzugsweise gegen einen Anschlag R.

13. Verfahren zur Montage einer modularen Dichtung nach einem der Ansprüche 5 bis 10 an einer Waage nach einem der Ansprüche 11 oder 12, umfassend folgenden Verfahrensschritt:
Einschrauben der Halterung (H) mit ihrem Gewinde (N₁) in ein passendes Gegengewinde im Waagengehäuse (C), wobei durch das Einschrauben gleichzeitig
a) die Halterungsöffnung (O) relativ zur Gehäuseöffnung (O_{G}) der Waage und/oder zum Lasteinleitungselement (L) zentriert wird, und
b) der wenigstens eine Ringkanal (K) auf seiner der Waage zugewandten Oberseite durch das Waagengehäuse in Höhenrichtung (Z) verschlossen sowie in radialer Richtung durch die zwischen Boden (B) und Waagengehäuse (C) geklemmten Dichtmittel abgedichtet wird.

14. Verfahren nach dem vorhergehenden Anspruch, **dadurch gekennzeichnet, dass** durch das Einschrauben gleichzeitig auch
c) der Ringkanal (K) strömungstechnisch verbunden wird mit der Mündung eines auf der Unterseite des Waagengehäuses (C) herausgeführten und das Fluid für das Dichtelement bereitstellenden Gehäusekanals (Q).

15. Dichtelement (D) für eine modulare Dichtung (M) nach einem der Ansprüche 1 bis 10, wobei das Dichtelement (D) als reversibel elastischer, mit einem Fluid beaufschlagbarer Wulst rotationssymmetrisch um eine Längsachse (Zₐ) ausgebildet ist, die sich in einer Höhenrichtung (Z) erstreckt, und wobei das Dichtelement in seinem Inneren einen zur Längsachse (Z_{A}) rotationssymmetrischen Kern (E) aufweist:
a) wobei der Kern (E) zur Fixierung des Dichtelements (D) an einer Halterung (H) wenigstens einen Montageabschnitt des Dichtelements mit einem komplementär zum Montageabschnitt geformten Vorsprung übergreift, und/oder
b) wobei der Kern (E) eine wenigstens abschnittsweise wellenförmige Oberfläche aufweist, um einen scharfkantigen Kontakt mit der Innenseite des Dichtelements (D) zu vermeiden, und/oder
c) wobei der Kern (E) wenigstens eine aus dem Inneren des Dichtelements herausführende Bohrung aufweist, mit welcher das Dichtelement mit Fluid versorgt oder an einer Halterung (H) befestigt werden kann, und/oder
d) wobei das Dichtelement auf einer dem Kern (E) abgewandten, vorzugsweis ebenen Außenfläche wenigstens eine Vertiefung (P₃) aufweist, die einem Vorsprung (E₁) des Kerns in Höhenrichtung Z gegenüberliegt.
